# EUROPEAN PATENT SPECIFICATION

(11) **EP 2 489 978 B1**
(45) Date of publication and mention of the grant of the patent: **05.08.2015**
(21) Application number: 12155515.5
(22) Date of filing: 15.02.2012
(51) Int. Cl.: G01B 11/10, A01G 23/083

(54) **A measuring device for a harvesting head**
Messvorrichtung für einen Ästungskopf
Dispositif de mesure pour une tête d'élagage

(30) Priority: 17.02.2011 SE 1150129
(43) Date of publication of application: 22.08.2012
(73) Proprietor: Komatsu Forest AB, 907 04 Umea (SE)
(72) Inventor: Ärlestig, Martin, 922 66 Tavelsjö (SE)
(74) Representative: Zacco Sweden AB

(56) References cited:
- JP-A- 7 086 681
- US-A- 5 832 107
- US-A- 5 986 745
- US-A1- 2004 246 473
- US-A1- 2006 017 935
- US-B1- 7 679 757

## Description

The present invention concerns an arrangement to measure the diameter of tree trunks fed along their longitudinal direction into a tree harvester, according to the introduction to claim 1.

In association with the handling by a removal machine, such as a tree harvester or similar forestry machine, of a tree trunk after felling, the diameter of the tree trunk is measured during the same operation. This measurement takes place either with the aid of what are known as "delimbing jaws" that are a component of the tree harvester and whose principal task is to remove branches from the tree trunk being handled, or by means of the feed rollers with which the tree harvester is equipped for the feed forwards and control of the tree trunk in the tree harvester to the delimbing jaws. With respect to measurement of the trunk diameter, the known solutions demonstrate considerable problems. When a measurement of the diameter of a tree trunk is carried out by, for example, the forward delimbing jaws of the tree harvester, any thick branches on the tree trunk cause the delimbing jaws to open in a disadvantageous manner or to be driven towards an open condition, which leads to significant imprecision in the result of the measurement. If the tree trunk is curved, it is further necessary to handle the tree trunk in the harvester with at least partially open delimbing jaws, whereby no useable measurement results can be obtained. Furthermore, it has been established that not only the hardness of the wood material but also variations in its temperature affect the final result of the measurement significantly when the measurement rollers arranged to control the motion of the tree trunk in the harvester are used for measurement of the diameter of the tree trunk. The hardness of the wood material causes significant differences in the depth to which the feed rollers can penetrate the tree trunk, while the temperature variations of the wood material in turn lead to the bark becoming loose in different ways along the tree trunk, which results in irregular and unacceptable measurement results. A further factor that causes errors in the measurement of diameter is the fact that the weight of the tree trunks when these are processed in a horizontal position causes the downwardly facing supports (the feed wheels) to be opened, whereby the tree trunk is at the same time removed from the reference surface. Thus, when the diameter that has been determined on the basis of the position of the supports is subsequently interpreted, the diameter will be too large. In order to avoid these problems, the users of forestry machines increase the pressure of the adjustment means of the supports to such a high level that the influence of force from the supports becomes so large that problems arise with damage to the tree trunks arising from the forces of friction that arise. The softness of the surface structure of the tree trunks varies between different seasons, and this increases the tendency for damage.

WO 2006/126952 A2 reveals a tree harvester with measurement sensor for the contact-free measurement of the diameter of a tree trunk. The diameter is measured by means of three measurement sensors that are distributed at mutual distances around the circumference of the tree trunk. Each measurement sensor includes a laser and a camera, which are located in a common holder.

EP 08 871 008 A2 describes an arrangement for the measurement of the diameters of tree trunks. The arrangement has sensors that are located at diametrically opposite sides of the tree trunk, where each such sensor includes a source of light and a photodetector.

A number of apparatus for the contact-free measurement of the diameter of a tree trunk corresponding to the above mentioned are known from US 5 986 745 A; US 5 832 107 A; US 2004/246473 A1; JP 7 086681 A; US 7 679 757 B1 and US 2006/017935 A1.

The purpose of the present invention is to solve the problems of the prior art measurement technology and in this way to achieve a robust and reliable solution with measurement sensors that makes it possible to measure by means of contact-free measurement in a more reliable manner a tree trunk that is fed forwards and handled in a tree harvester. It should be understood that it is desirable to achieve, independently of the type of measurement system, a tree harvester with as compact dimensions as possible. When placing the measurement sensors close to the tree trunk that is to be measured, however, the problem always arises with the demanding operating conditions, and thus the need to protect the sensor optical system from becoming clogged and being negatively influenced by external conditions such as, for example, dust and chips from the saw arrangement of the harvester, or, for example, snow, ice and condensation, etc., when working in cold weather.

This purpose of the invention is achieved through an arrangement for the measurement of the diameter of tree trunks that are fed forwards in a tree harvester demonstrating the distinctive features and characteristics that are given in claim 1. Further advantages of the invention are made clear by the non-independent claims.

The invention is based on the idea of achieving improved maintenance and control of the operating conditions of the sensitive optical measurement sensors in a tree harvester by creating a subcompartment having the form of a slot. The operating conditions in the subcompartment that is formed can be maintained and controlled through the maintenance of a desired climate of temperature, air pressure, etc., whereby, for example, dust and condensation can be kept away from the sensor optical system. The sensor can in this way be placed in close association with the measurement area of a tree trunk, which results in improved measured values. Due to the air demonstrating a higher temperature and a higher pressure than the surrounding atmosphere, fogging and condensation on the optical system of the sensor are prevented. The sensor is protected from impacts and blows through the design of the housing, with a protective screen and viewing ports arranged in it.

Significant advantages are obtained from the invention. Thus, the diameter of tree trunks can be measured not only when the tree trunk is in motion in the harvester but also when it is stationary. Further, erroneous measurement data caused by slipping and similar in mechanically active measurement devices can be avoided, as also can measurement errors that are caused by individual faults such as thick branches or bark that falls off. During the reading of measurement information, the results are obtained from a mechanically uninfluenced and fully undisturbed surface, and provide information about the dimensions and volume of a specific log, the information from which can also be stored in a database. This method of measuring results also in the measurement results being independent of and completely uninfluenced by the motion of the tree trunk through the harvester, the temperature of the tree trunk, and variations in its hardness. The measurement information that is obtained is thus always correct, independent of the external circumstances and even independent of whether the tree trunk is being handled or fed forwards in the harvester at the same time. In the event of variations in the measured information arising, measures can be rapidly taken for control measurement, and, if necessary, calibration of the measured values of the diameter of the tree trunk received.

The invention will be described below in more detail under the guidance of an embodiment and with reference to attached drawings, of which:
Figure 1 shows a side view of a tree trunk during processing in a tree harvester oriented in an essentially horizontal trimming position, in which harvester a measurement device of the present type is arranged,
Figure 2 shows a perspective view of a harvester with the present measurement device in an upright felling position, ready to fell a tree through the gripping of its lower part,
Figure 3 shows a detailed view in perspective of a bracket that is a component of the present measurement device and with an integrated measurement sensor,
Figure 4 shows a cross-section through the tree harvester viewed along the line IV-IV in Figure 1 during the processing of a tree trunk and during measurement of the diameter of the tree trunk with the present measurement device,
Figure 5 shows a sketch in principal of a circuit diagram for a washing facility that is a component of the measurement device,
Figure 6 shows a sketch in principal of a circuit diagram for a climate-control facility that is a component of the measurement device,
Figure 7 shows a perspective view with separated parts of a bracket with an integrated sensor that is a component of a measurement device according to the invention,
Figure 8 shows a perspective view with separated parts of a bracket with an integrated sensor and a front cover that has been removed.

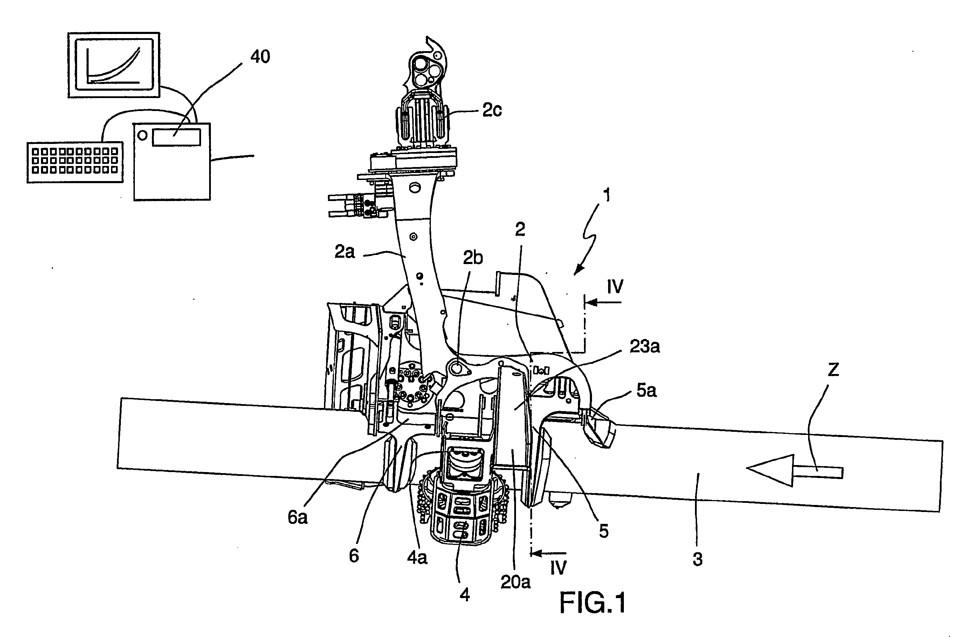

A single-grip harvester 1 for the felling and processing of trees is shown in Figures 1 a and 2. The harvester 1 has a frame 2 with which it is mounted through a yoke-shaped fixture arrangement 2a on a displaceable arm of a forestry machine, not shown in the drawings. The frame 2 is jointed at the yoke-shaped fixture arrangement through opposing guide pegs 2b that can be swivelled around an essentially horizontal axis in order to be changed between a felling position for the felling of trees, in which the harvester is oriented in an essentially vertical direction, and a trimming position, in which the harvester is oriented in an essentially horizontal direction. An attachment and rotation means 2c is arranged in the upper part of the frame 2a for the rotation of the harvester around a vertical axis. The term "single-grip harvester" is here used to denote also a forestry machine that grips the tree trunk that is to be processed only once and does not release it until it has been processed, trimmed and cut to suitable lengths. The frame 2 defines a tree feed pathway, which is a pathway along which a felled tree 3 is fed through the harvester 1 for trimming and cutting in order to complete its processing (the arrow Z in Figure 1). This pathway is essentially horizontal when the single-grip harvester 1 is in its processing position, as is shown in Figure 1. The single-grip harvester 1 has further two feed wheels 4 that can be rotated, arranged one on each side of the tree feed pathway, which wheels can be displaced by pivot arms 4a arranged on the frame towards and away from the tree feed pathway in order to be able to grip trees of various trunk diameters and feed them along this pathway. The single-grip harvester 1 has two sets of trimming knives, an upper set 5 and a lower set 6, which are arranged at a distance from each other along the tree feed pathway. Each set 5 and 6 has three knives, one of which 5a, 6a is fixed, and two of which 5b, 5c and 6b, 6c are displaceable and which together form delimbing jaws that surround the tree trunk 3. The fixed knives 5a, 6a at the same time act as reference surfaces of the frame 2 while the upper and lower interacting pairs of trimming knives 5b, 5c and 6b, 6c act as supports that support the tree trunk 3 against the reference surfaces of the tree feed pathway when the tree trunk has been swung into the horizontal processing position as shown in Figure 1, and hold the tree trunk stationary during the sawing operation. The displaceable knives 5b, 5c and 6b, 6c can each be pivoted around an axis that is parallel to the tree feed pathway in order to press the tree trunk 3 from below up against the fixed knife 6a, which forms a fixed support, and to surround the tree trunk together with the fixed knife. The displaceable knives 5b, 5c and 6b, 6c can each be pivoted by means of a double-action hydraulic cylinder unit. The single-grip harvester 1 comprises a saw arrangement 12 with a guide plate 14 arranged in a sawing box 13, which saw arrangement is connected to the frame 2 in a manner that allows it to pivot around an axis that is parallel with the tree feed pathway. The guide plate 14 supports a saw chain mounted upon it, which saw chain is driven by a hydraulic motor arranged on the frame 2. The saw arrangement 12 cuts the trimmed tree trunk 3 into defined lengths.

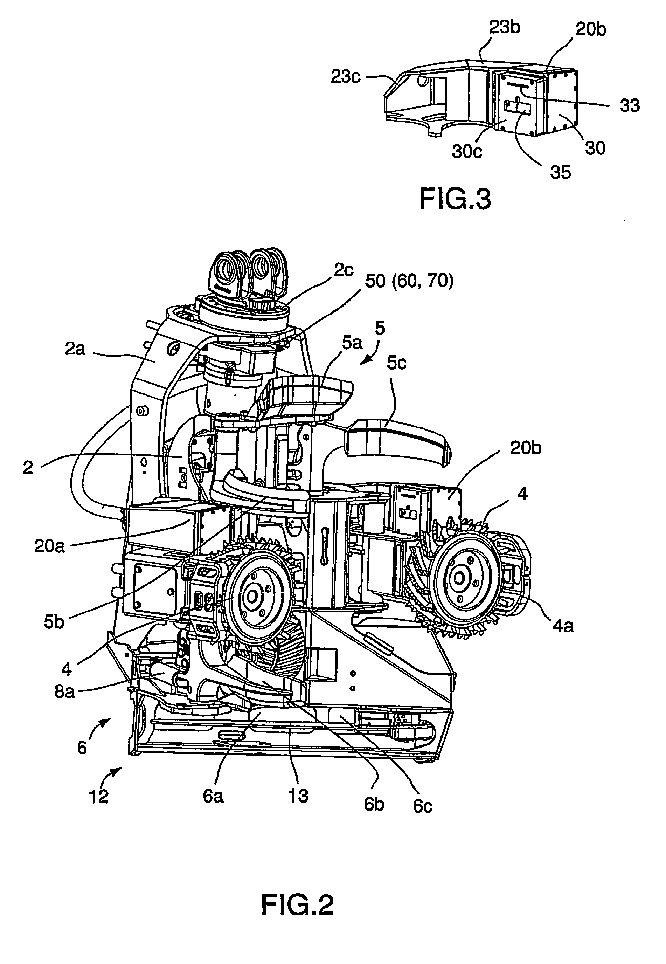

According to the present invention, the harvester 1 is equipped with an optical measurement device that includes pairwise arranged optical measurement sensors 20a and 20b intended for the contact-free measurement of the diameter of the trimmed tree trunk 3. For reasons of clarity and for increased understanding, the sensors in Figure 3 are illustrated angled backwards somewhat in the longitudinal direction of the tree trunk. It should, however, be pointed out that the sensors 20a, 20b are intended to be oriented, when in application, at a right angle to the tree trunk 3 and on diametrically opposing sides of it.

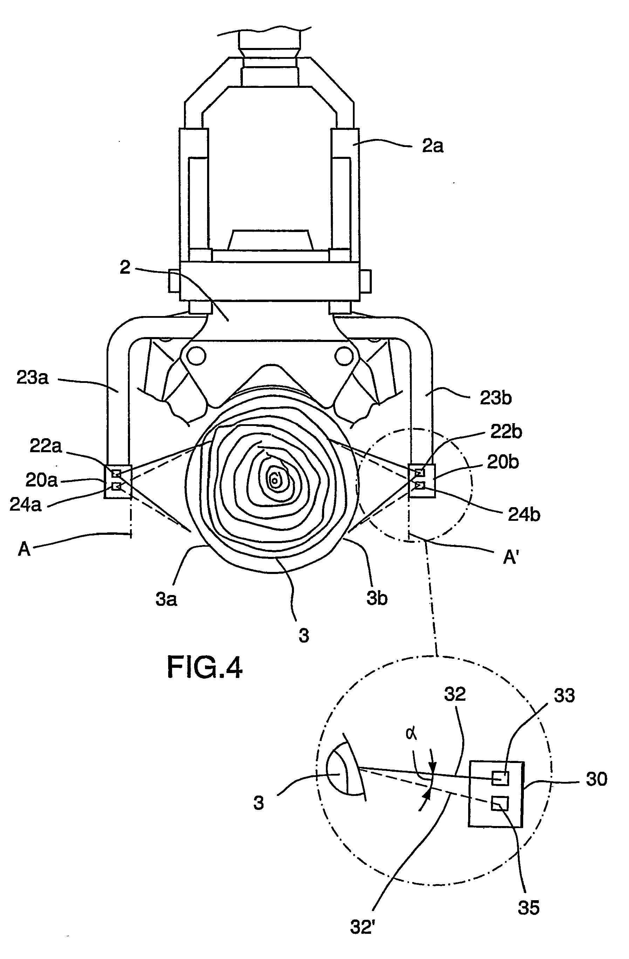

With reference to Figure 4, each one of the pairwise sensors 20a and 20b arranged on opposing sides of the tree feed pathway comprises a source of light 22a, 22b for the projection of a patch of light onto the tree trunk and an optical receiver 24a, 24b for the imaging of the patch of light at a position-scanning photodetector. The said source of light may include, for example, a line laser of semiconductor type, and the position-sensitive detector may include, for example, a CCD camera. The said sensors 20a, 20b are housed inside a housing 30 arranged each at one free end of a bracket 23a, 23b, which bracket at its second end is fixed attached to the frame 2 of the harvester 1 (see also Figures 1 and 2). When the harvester 1 is in its trimming position, as is shown in Figures 1 and 3, these two brackets 23a, 23b extend, consequently, in the downwards direction, whereby the sensors 21 a and 21 b are located on diametrically opposing sides of the tree trunk 3 that is supported in the harvester 1 and passed along its feed pathway. The two pairwise active sensors 20a and 20b are each thus turned towards a half circumference 3a, 3b of the tree trunk 3. A laser beam 32 exits from the housing 30 through a window 33 of a first pair of viewing ports arranged in the housing. The reflected beam 32' that is to be received is led into the housing through a another window 35 of the said first pair of viewing ports in the housing, whereby the said two windows 33, 35 of the first pair of viewings ports are located in a common plane, denoted A in Figure 3. As a consequence of this, the two sensors 20a and 20b for measurement of diameter are located opposite to each other in opposite parallel planes A and A'. At this, a triangulation angle, which is denoted by α in the detailed enlargement shown in Figure 4, arises between the direction of the projected emitted laser beam 32 and the direction of the reflected beam 32' that is received at the half circumferences of the tree trunk 3. The selection of the triangulation angle α depends on the magnitude of the surface deviations that the tree trunk 3 can demonstrate such that it will still be possible to measure it with a sufficiently large precision. The laser light 32' that has been reflected from the half circumference of the tree trunk 3 is led through the second window 35 into the housing 30 and collected in the relevant optical receiver 24a, 24b for assignment of pixels or assignment of line images and further processing. It is appropriate that the said optical receivers 24a, 24b for the two sensors 20a and 20b, respectively, are so selected that an existing row of several pixels lying next to each other can be evaluated separately within the range of a received cone of rays. It is appropriate that the optical receiver 24a, 24b be equipped also with an evaluation unit in which the intensity and the width at half height with which the point of light that is created by the projection unit impinges upon the receiver can be measured, and by which the radiated power of the projection unit can be regulated such that a constant signal in the receiver is obtained.

A treatment unit in the form of a computer 40 is shown schematically in Figure 1, which treatment unit the present measurement device comprises and that, connected to the relevant measurement sensors 20a, 20b, is used for the determination of the position by means of triangulation, based on the line image that has been recorded. Triangulation is a well-known method for the determination of positions and therefore will not be described in more detail. Since each one of the sensors 20a, 20b that are components of the present measurement device is essentially identical and since they work in pairs, only one of these sensors will be described in more detail below, for reasons of simplicity. Furthermore, neither the source of light 22a, 22b of the sensors 20a, 20b nor the optical receivers 24a, 24b of the sensors for the imaging of patches of light on a position-sensitive detector will be described in more detail since such components are well-known within the prior art and are commercially available in a number of different variants and designs.

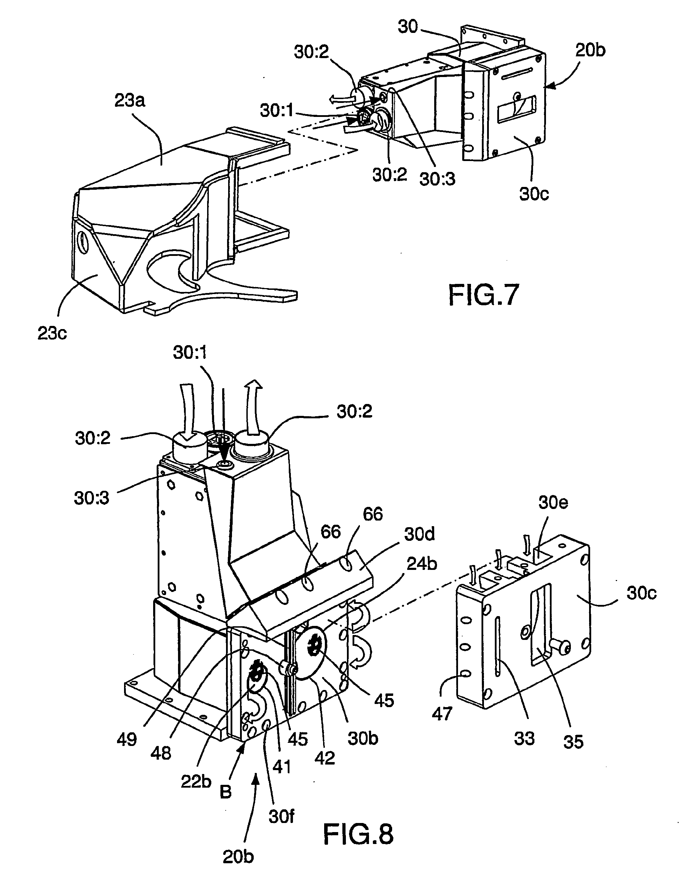

Figure 3 and Figures 7 and 8 show in more detail the bracket 23b of the two identical, but mirror-image, brackets 23a and 23b. The said bracket 23b is manufactured from lightweight metal that has been cast to the form of a box-like piece or profile, which is extended in one direction in the manner of an arm. The bracket 23b has a fixture 23c at one of its ends, with which fixture the bracket is mounted on the frame 2 of the harvester 1. The housing 30 that contains the sensor 20b is attached at the part of the bracket 20b that is located farthest away from the harvester 1, i.e. at the free end of the bracket 23b. The sensor 20b is constructed as a unit that is integrated in the said housing 30. The housing 30, which is principally manufactured from cast lightweight metal, surrounds not only the source of light 22b for the projection of an exiting laser beam onto one half circumference 3b of the tree trunk 3, but also the optical receiver 24b for the imaging of the patch of light on a position-sensitive detector, as shown in particular in the enlargement of detail in Figure 4 and in Figure 8. The source of light 22b and the optical receiver 24b are mounted on an wall 30b in the housing 30, which wall 30b is plane-parallel with the plane A'. As Figure 7 makes most clear, the housing 30 forms an external and removable unit of the bracket 23b that can be easily exchanged, and that is intended to be inserted into the free end of the free part of the box-shaped bracket.

A sensor 20b is shown in Figure 8 with a front cover 30c removed from the housing 30, whereby it becomes clear that the sensor has openings 41, 42 forming a second pair of viewings ports in the limiting wall 30b in the housing for emitted and for reflected light, respectively. The openings 41, 42 are covered by a transparent optical protection sheet 45 of glass or plastic, so placed that it protects the source of light 22b and the optical receiver 24b that are arranged in the housing from dust and circulating sawdust. The front cover 30c forms a protective screen and, for this purpose, two separate groove-shaped viewing ports have been assigned to it, which ports form a part of the above-mentioned windows 33, 35 for the emitted light 32 and the reflected light 32', respectively. The said viewing ports 33, 35 are located centrally in front of the said source of light 22b and optical receiver 24b, respectively, which, in turn, are hidden behind the transparent protective sheets 45 in the wall 30b of the housing. Thus the viewing ports 33, 35 allow light to pass into and away from the sensor 20b. The demountable front cover 30c of the housing is provided with drainage holes 47. A motor (not shown in the drawings) is located in the housing 30 that drives a wiper blade 49 via a shaft 48, which wiper blade is arranged such that it very rapidly sweeps over the protective glass 45 on activation of the motor.

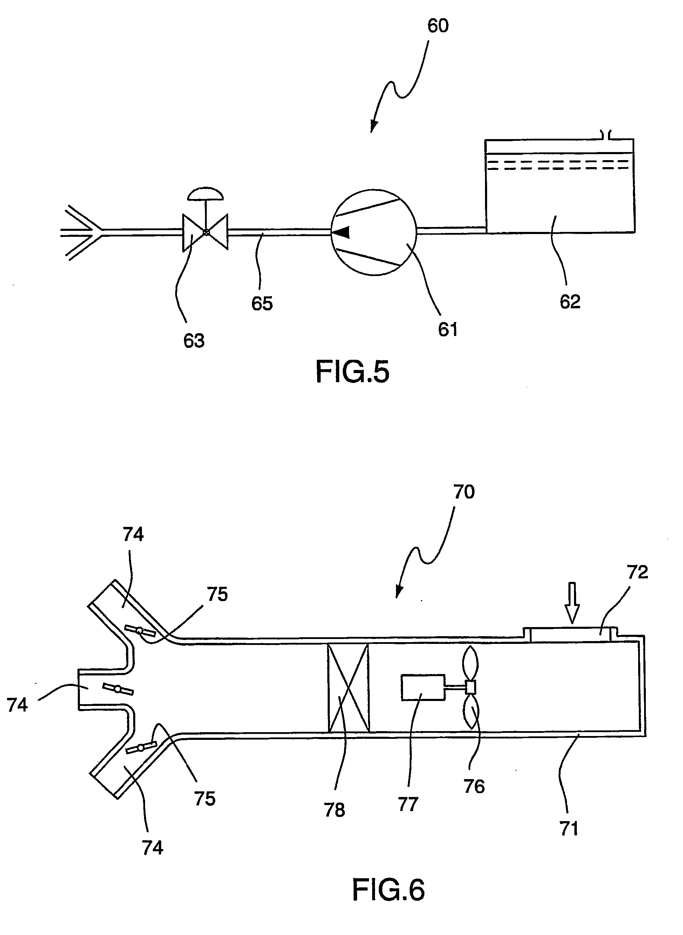

With reference to Figures 5 and 6, a function-secured system that is part of the present measurement device is described. It is appropriate that the function-secure system that is generally denoted by 50 in Figure 2 be fully or partially arranged as an integrated part of the harvester 1, and which system includes not only a washing unit 60 for the periodic cleaning of optical components that are part of the arrangement, but also a climate-control unit 70 that prevents fogging and condensation from forming on the optical components in cold conditions. Due to the combination of these two units, the risk of erroneously interpreted measured values can be minimised or essentially fully avoided, even in the demanding environment and in the extreme operating conditions in which a harvester on a forestry machine works.

A sketch of the principle of the washing unit 60 that is a component of the measurement device is shown in Figure 5, which washing unit is intended to periodically clean the optical components of the measurement device by spraying washing fluid onto them. The washing unit 60 comprises principally a pump 61, a container 62 for cleaning fluid and a flow valve 63 that can be regulated. A pressure is produced in the washing unit through the action of a pump 64. It is, however, possible to produce the pressure by the use of pressurised air, which is led from a special pressurised container in the container 62 for washing fluid, or which is pressed directly into the container. The pump 61 draws washing fluid from the container 62 and presses it through the lines 65, through the flow valve 63 to spray nozzles 66 that are arranged at the sensors 20a, 20b.

A sketch of the principle of the climate-control unit 70 that is a component of the present measurement device is shown in Figure 6, which climate-control unit is arranged to prevent fogging and condensation from forming on the optical components of the measurement device in cold conditions, by leading air past the sensor 20a. The climate-control unit 70 includes a housing 71 that has an air intake 72 at its forward end and air outlet nozzles 74 at its rear region from which the air that has been treated in the climate-control unit flows. Baffles 75 are arranged in the various air outlet nozzles 74 in order to regulate the individual air flows: the flow of air can be restricted or completely blocked with these baffles. A fan for the supply of air and consisting of a fan wheel 76 and a fan motor 77 is present in the air channel. A heating battery or heating element 78 is located behind the fan, when viewed in the direction of flow, that may be heated either electrically or though the passage of a heated medium. It is advantageous that such a heated medium be constituted by excess heat from the forestry machine. A large fraction of the energy supplied to the combustion engine of the forestry machine is converted to heat, which is normally emitted in a radiator to the surrounding air as waste heat. It is advantageous that excess heat from the motor be used for the heating of the sensors 20a, 20b by allowing heated air to pass through or flow past them.

In the embodiment of the invention described here, not only the washing unit 60 but also the climate-control unit 70 are integrated in order to form together a unit that is mounted immediately at the harvester 1 and generally denoted by reference number 50 in Figure 2.

With reference to Figures 7 and 8, it is shown that the housing 30 has a number of connections at its rear, which connections comprise a contact 30:1 for the connection of electrical cabling for the sensor 20a and its electronic circuits, openings 30:2 in the form of supply and return flows for leading heated air from the climate-control unit 70 through the sensor 20a, and an opening 30:3 for leading cleaning fluid under pressure from the washing unit 60 to the sensor 20b. A slot-shaped subcompartment denoted by B in Figure 8 is formed between the inner surface of the front cover 30c of the sensor housing 30 and the transparent protective sheets 45 in the wall 30b of the housing. The wiper blade is located inside the said subcompartment B such that it can sweep over the protective sheets 45 when it is activated. A side piece 30d is arranged in connection with the front cover 30c of the sensor housing 20a, in which side piece a series of the said spray nozzles 66 that are components of the washing unit 60 are arranged in a row. These spray nozzles 66 are in connection with the washing unit 60 through connection openings 30:3 in the housing 30 and they can spray washing fluid into the slot-shaped subcompartment B at freely chosen intervals, for example after cutting of the tree trunk 3 by means of the saw arrangement 12 has been carried out. In order to ensure that the washing fluid is led into the slot-shaped subcompartment B, there is arranged in one side edge of the front cover 30c a series of indentations 30e that are located centrally in front of the relevant spray nozzle 66 when the protective cover has been mounted. The slot-shaped subcompartment B is, furthermore, in connection with the climate-control unit 70 through a number of openings 30f that are arranged in the outer section 30b of the wall of the housing and the side piece 30d (not visible in Figure 8) in order to open out into the said slot-shaped subcompartment B. The openings 30f are so located that heated air flows in the direction of the arrows through the slot-shaped subcompartment B and thus over the transparent protective sheets 45 of the sensor. Due to the flow of air, the line of sight of the sensor 20b is held free of dust and sawdust, and particles are prevented from settling on the protective sheets 45 of the sensor. Due to the flow of air, an excess pressure is obtained that not only efficiently prevents particles from entering the sensor 20b, but also supplies heat with a temperature that exceeds the temperature of the atmosphere, which prevents the formation of ice, fogging or condensation.

The invention is not limited to what has been described above and shown in the drawings: it can be changed and modified in several different ways within the scope of the innovative concept defined by the attached patent claims.

## Claims

1. A measurement device, intended to be mounted at a tree harvester (1) for the measurement of the diameters of tree trunks (3) fed forwards in their longitudinal direction (3) during processing in the harvester, comprising:
a first and a second optical sensor (20a, 20b), each one of which is integrated into a housing (30) provided with openings (41, 42; 33, 35) for the passing of emitted and reflected light, respectively, whereby each sensor includes a source (22a, 22b) of light arranged in the housing for the projection of a patch of light onto the tree trunk and an optical receiver (24a, 24b) for the imaging of the patch of light on a position-sensitive photodetector,
a pair of brackets (23a, 23b) designed as supports for the sensors (20a, 20b), which brackets are so arrangeable on a frame (2), which is a component of the harvester (1), that the said housing (30) and the sensors (20a, 20b) that are arranged in it are located on opposite sides of the tree trunk (3) as it is fed forwards in the harvester, **characterised in that** each housing (30) is provided with a subcompartment (B) having the form of a slot and is limited between a removable protective cover or screen (30c) arranged on the housing and a wall (30b) of the housing located behind the removable protective cover or screen (30c), wherein,
the openings for the passing of emitted and reflected light for the optical sensors (20a, 20b) in the housing (30) are arranged as two pairs of separate openings arranged at a distance in front of each other and being comprised of;
a first pair of viewing ports (41, 42) arranged as openings in the wall (30b) of the housing (30) and which openings are covered with a transparent optical protection glass (45),
and a second pair of viewing ports (33, 35) which are arranged in the removable protective cover or screen (30c).

2. The measurement device according to claim 1, comprising a climate-control unit (70) arranged to generate a forced air flow that demonstrates a temperature that exceeds the temperature of the surrounding atmosphere and that is caused to pass through the slot-shaped subcompartment (B) in each housing.

3. The measurement device according to any of claims 1-2, comprising a washing unit (60) intended to clean the optical components of the sensors (20a, 20b) at periodic intervals by the application of a washing fluid under pressure to the protective glass (45) of the first pair of viewing ports (41, 42) through spray nozzles (66) arranged in the slot-shaped subcompartment (B).

4. The measurement device according to any one of claims 1-3, whereby each housing (30) comprises a motor that drives through a shaft (48) a wiper blade (49) located in the slot-shaped subcompartment (B) and arranged to sweep, at periodic activation of the motor, across the protective glass of the the first pair of viewing ports (45).

5. The measurement device according to any one of claims 3-4, whereby the removable protective cover or screen (30c) is provided with drainage holes (47) for leading fluid out from the slot-shaped subcompartment (B).

6. The measurement device according to any one of claims 3-5, whereby the washing unit (60) and the climate-control unit (70) form a part of a functional-securing system (50) that is mounted as a unit fully or partially immediately at the harvester (1).

7. The measurement device according to any one of claims 1-5, whereby the second pair of viewing ports (33, 35) are arranged separated from each other, preferably in groove-shaped openings in the removable protective cover or screen (30c).

8. The measurement device according to any one of claims 1-6, whereby the first and the second sensors (20a, 20b), each of which is accommodated in the said housing (30), are arranged on diametrically opposite sides of the tree trunk (3) that is being fed forwards in the harvester.

9. The measurement device according to claim 8, whereby the first and second sensors (20a, 20b) and the associated first and second pair of viewing ports (41, 42; 33, 35) are located oriented centrally with respect to each other, positioned in opposite parallel planes (A and A') for the projection of the patch of light onto the relevant half circumference (3a, 3b) of the tree trunk (3).

10. The measurement device according to any one of claims 1-9, whereby the source (22a, 22b) of light that is a component of each sensor (20a, 20b) and the optical receiver (24a, 24b) are located one after the other (23a, 23b) when seen in the axial direction of the bracket (23a, 23b) in a direction out from the tree feed pathway of the harvester.

## Patentansprüche

1. Messvorrichtung, die an einem Baumernter (1) zur Messung der Durchmesser von während der Bearbeitung im Baumernter in ihrer Längsrichtung (3) vorwärts geführten Baumstämmen (3) zu montieren ist, umfassend:
einen ersten und einen zweiten optischen Sensor (20a, 20b), von denen jeder in ein mit Öffnungen (41, 42; 33, 35) versehenes Gehäuse (30) zum Durchgang ausgestrahlten bzw. reflektierten Lichts eingebaut ist, wobei jeder Sensor eine Lichtquelle (22a, 22b), die im Gehäuse zur Projektion eines Lichtfleckens auf den Baumstamm angeordnet ist, und einen optischen Empfänger (24a, 24b) zum Abbilden des Lichtfleckens auf einem ortsempfindlichen Fotodetektor enthält,
ein Paar von Bügeln (23a, 23b), die als Stützen für die Sensoren (20a, 20b) ausgebildet sind, welche Bügel so auf einem Rahmen (2) anordenbar sind, welcher eine Komponente des Baumernters (1) ist, dass das Gehäuse (30) und die Sensoren (20a, 20b), die darin angeordnet sind, auf gegenüberliegenden Seiten des Baumstamms (3) befindlich sind, während er im Baumernter vorwärts geführt wird, **dadurch gekennzeichnet, dass** jedes Gehäuse (30) mit einer Unterkammer (B) versehen ist, die schlitzförmig ist und zwischen einer entfernbaren schützenden Abdeckung oder Abschirmung (30c) begrenzt ist, welche am Gehäuse und einer Wand (30b) des Gehäuses, befindlich hinter der entfernbaren schützenden Abdeckung oder Abschirmung (30c), angeordnet ist, wobei die Öffnungen zum Durchgang des ausgestrahlten und reflektierten Lichts für die optischen Sensoren (20a, 20b) im Gehäuse (30) als zwei Paare einzelner Öffnungen angebracht sind, die voreinander beabstandet angeordnet sind und aus;
einem ersten Paar von als Öffnungen in der Wand (30b) des Gehäuses (30) angeordneten Beobachtungsfenstern (41, 42), und welche Öffnungen mit einem durchsichtigen optischen Schutzglas (45) gedeckt sind,
und einem zweiten Paar von in der entfernbaren schützenden Abdeckung oder Abschirmung (30c) angeordneten Beobachtungsfenstern (33, 35) bestehen.

2. Messvorrichtung nach Anspruch 1, umfassend eine Klimasteuereinheit (70), die dazu ausgelegt ist, eine erzwungene Luftströmung zu erzeugen, die eine Temperatur anzeigt, welche die Temperatur der Umgebungsatmosphäre übersteigt, und die dafür vorgesehen ist, durch die schlitzförmige Unterkammer (B) im jeden Gehäuse durchzugehen.

3. Messvorrichtung nach einem der Ansprüche 1 bis 2, umfassend eine Wascheinheit (60), welche zum Reinigen der optischen Komponenten der Sensoren (20a, 20b) in periodischen Abständen durch Aufbringen einer unter Druck stehenden Waschflüssigkeit auf das Schutzglas (45) des ersten Paars von Beobachtungsfenstern (41, 42) durch Sprühdosen (66) dient, die in der schlitzförmigen Unterkammer (B) angeordnet sind.

4. Messvorrichtung nach einem der Ansprüche 1 bis 3, wobei jedes Gehäuse (30) einen Motor umfasst, welcher durch eine Welle (48) ein Wischblatt (49) treibt, welches sich in der schlitzförmigen Unterkammer (B) befindet und beim periodischen Einschalten des Motors zum Fegen über das Schutzglas des ersten Paars von Beobachtungsfenstern (45) ausgelegt ist.

5. Messvorrichtung nach einem der Ansprüche 3 bis 4, wobei die entfernbare schützende Abdeckung oder Abschirmung (30c) mit Ablauflöchern (47) zur Ableitung der Flüssigkeit von der schlitzförmigen Unterkammer (B) versehen ist.

6. Messvorrichtung nach einem der Ansprüche 3 bis 5, wobei die Wascheinheit (60) und die Klimasteuereinheit (70) einen Teil eines funktionssicherndes Systems (50) bilden, das ganz oder teilweise unmittelbar am Baumernter (1) als eine Einheit befestigt ist.

7. Messvorrichtung nach einem der Ansprüche 1 bis 5, wobei das zweite Paar von Beobachtungsfenstern (33, 35) voneinander, vorzugsweise in rillenförmigen Öffnungen in der entfernbaren schützenden Abdeckung oder Abschirmung (30c), getrennt angeordnet sind.

8. Messvorrichtung nach einem der Ansprüche 1 bis 6, wobei der erste und der zweite Sensor (20a, 20b), von denen jeder im Gehäuse (30) untergebracht ist, auf diametrisch gegenüberliegenden Seiten des im Baumernter vorwärts geführten Baumstamms (3) angeordnet sind.

9. Messvorrichtung nach Anspruch 8, wobei der erste und zweite Sensor (20a, 20b) und das zugehörige erste und zweite Paar von Beobachtungsfenstern (41, 42; 33, 35) im Verhältnis zu einander orientierend mittig angeordnet sind, in gegenüberliegenden parallelen Ebenen (A und A') zur Projektion des Lichtfleckens auf den entsprechenden halben Umfang (3a, 3b) des Baumstamms (3) angebracht sind.

10. Messvorrichtung nach einem der Ansprüche 1 bis 9, wobei die Lichtquelle (22a, 22b), die eine Komponente jedes Sensors (20a, 20b) ist, und der optische Empfänger (24a, 24b) hintereinander (23a, 23b), wenn in der axialen Richtung des Bügels (23a, 23b) in einer Richtung vom Baumzufuhrweg des Baumernters aus gesehen, angeordnet sind.

## Revendications

1. Dispositif de mesure, destiné à être monté à une récolteuse d'arbres (1) pour la mesure des diamètres des troncs d'arbres (3) nourris vers l'avant dans leur direction longitudinale (3) pendant le traitement dans la récolteuse, comprenant:
un premier et un deuxième capteur optique (20a, 20b), dont chacun est intégré dans un boîtier (30) pourvu d'orifices (41, 42; 33, 35) pour le passage de la lumière respectivement émise et réfléchie, chaque capteur comprenant une source (22a, 22b) de lumière disposée dans le boîtier pour la projection d'une tache de lumière sur le tronc d'arbre et un récepteur optique (24a, 24b) pour la formation d'image de la tache de lumière sur un photodétecteur sensible à la position,
une paire de supports (23a, 23b) conçus en tant que supports pour les capteurs (20a, 20b), lesdits supports pouvant être disposés sur un cadre (2) qui est un composant de la récolteuse (1) si bien que ledit boîtier (30) et les capteurs (20a, 20b) qui sont disposés dans celui-ci sont situés sur des côtés opposés du tronc d'arbre (3), lorsqu'il est alimenté vers l'avant dans la récolteuse, **caractérisé en ce que** chaque boîtier (30) est pourvu d'un sous-compartiment (B) ayant la forme d'une fente, et est limité entre un couvercle ou écran de protection détachable (30c) disposé sur le boîtier et une paroi (30b) du boîtier situé derrière le couvercle ou l'écran de protection détachable,
les orifices pour le passage de lumière émise et réfléchie pour les capteurs optiques (20a, 20b) dans le boîtier (30) étant arrangés comme deux paires d'orifices séparés arrangés à une distance l'un devant l'autre et étant compris par;
une première paire de ports de visualisation (41, 42) étant arrangés comme des orifices dans la paroi (30b) du boîtier (30) et lesdits orifices étant couverts d'un verre de protection optique transparent (45),
et une deuxième paire de ports de visualisation (33, 35) qui sont arrangés dans le couvercle ou l'écran de protection détachable (30c).

2. Dispositif de mesure selon la revendication 1, comprenant une unité de commande climatique (70) agencée pour générer un écoulement d'air forcé qui démontre une température qui dépasse la température de l'atmosphère environnante et qui est amené à passer à travers le sous-compartiment en forme de fente (B) dans chaque boîtier.

3. Dispositif de mesure selon l'une quelconque des revendications 1 à 2, comprenant une unité de lavage (60) destinée à nettoyer les composants optiques des capteurs (20a, 20b) à des intervalles périodiques par l'application d'un fluide de lavage sous pression pour le verre de protection (45) de la première paire de ports de visualisation (41, 42) à travers des buses de pulvérisation (66) disposées dans le sous-compartiment en forme de fente (B).

4. Dispositif de mesure selon l'une quelconque des revendications 1 à 3, dans lequel chaque boîtier (30) comprend un moteur qui entraîne par un arbre (48) une lame d'essuie-glace (49) située dans le sous-compartiment en forme de fente (B) et agencée de manière à balayer, à l'activation périodique du moteur, à travers le verre de protection de la première paire de ports de visualisation (45).

5. Dispositif de mesure selon l'une quelconque des revendications 3 à 4, dans lequel le couvercle ou l'écran de protection détachable (30c) est pourvu de trous de drainage (47) pour diriger le fluide hors du sous-compartiment en forme de fente (B).

6. Dispositif de mesure selon l'une quelconque des revendications 3 à 5, dans lequel l'unité de lavage (60) et l'unité de commande climatique (70) forment une partie d'un système fonctionnel de fixation (50) qui est monté comme une unité entièrement ou partiellement immédiatement à la récolteuse (1).

7. Dispositif de mesure selon l'une quelconque des revendications 1 à 5, dans lequel la deuxième paire de ports de visualisation (33, 35) sont arrangés l'un séparé de l'autre, de préférence dans des indentations en forme de rainure dans le couvercle ou l'écran de protection détachable (30c).

8. Dispositif de mesure selon l'une quelconque des revendications 1 à 6, dans lequel les premier et deuxième capteurs (20a, 20b) dont chacun est disposés dans ledit boîtier (30), sont arrangés sur des côtés diamétralement opposés du tronc d'arbre (3) qui est alimenté vers l'avant dans la récolteuse.

9. Dispositif de mesure selon la revendication 8, dans lequel les premier et deuxième capteurs (20a, 20b) et les première et deuxième paires de ports de visualisation associées (41, 42; 33, 35) se trouvent orientés centralement les uns par rapport aux autres, positionnées dans des plans parallèles opposés (A et A') pour la projection de la tache de lumière sur la demi-circonférence correspondante (3a, 3b) du tronc d'arbre (3).

10. Dispositif de mesure selon l'une quelconque des revendications 1 à 9, dans lequel la source (22a, 22b) de lumière qui est une composante de chaque capteur (20a, 20b) et le récepteur optique (24a, 24b) sont situés l'un après l'autre (23a, 23b) vu dans la direction axiale du support (23a, 23b) dans une direction à partir de la voie d'alimentation de l'arbre de la récolteuse.
